# EUROPÄISCHE PATENTSCHRIFT

(11) **EP 3 973 764 B1**
(45) Veröffentlichungstag und Bekanntmachung des Hinweises auf die Patenterteilung: **19.03.2025**
(21) Anmeldenummer: 21189042.1
(22) Anmeldetag: 02.08.2021
(51) Int. Cl.: A01D 43/08, A01B 79/00, G01N 21/359, G01N 21/01, G01N 21/84, G01N 21/3554

(54) **LANDWIRTSCHAFTLICHE MASCHINE MIT NIR-SENSOR UND DATENVERARBEITUNGSSYSTEM**
AGRICULTURAL MACHINE WITH NIR SENSOR AND DATA PROCESSING SYSTEM
MACHINE AGRICOLE POURVUE DE CAPTEUR NIR ET SYSTÈME DE TRAITEMENT DES DONNÉES

(30) Priorität: 29.09.2020 DE 102020125434
(43) Veröffentlichungstag der Anmeldung: 30.03.2022
(73) Patentinhaber: CLAAS Selbstfahrende Erntemaschinen GmbH, 33428 Harsewinkel (DE)
(72) Erfinder: Stremlau, Björn, 49509 Recke (DE); Grove, Carsten, 48361 Beelen (DE); Roggenland, Michael, 59757 Arnsberg (DE); Claussen, Frank, 33428 Harsewinkel (DE); von Nordheim, Maximilian, 33619 Bielefeld (DE); Wesselmann, Jörg, 33428 Harsewinkel (DE); Hagel, Jeremias, 48161 Münster (DE)
(74) Vertreter: CLAAS Gruppe

(56) Entgegenhaltungen:
- EP-A1- 2 545 761
- EP-A1- 3 366 104
- DE-A1- 102008 056 557
- FOSS: "Best-Practice-Beispiel für die Kalibrierung von NIR Geräten mit globalen Modellen", 1 June 2018 (2018-06-01), XP055881988, Retrieved from the Internet <URL:https://www.fossanalytics.com/-/media/files/documents/papers/feed-and-forage-segment/guide-calibration-best-practice-de.pdf> [retrieved on 20220120]

## Beschreibung

Die vorliegende Erfindung betrifft eine landwirtschaftliche Maschine, insbesondere eine Erntemaschine wie etwa einen Mähdrescher oder einen Feldhäcksler, mit einem NIR-Sensor, und ein Datenverarbeitungssystem, das ein oder mehrere dieser Maschinen umfasst.

NIR-Sensoren messen die Menge des von einer Probe durchgelassenen oder reflektierten Lichts im nahen Infrarotbereich. Organische Stoffe haben in diesem Spektralbereich im Allgemeinen strukturreiche Absorptions- bzw. Reflexionsspektren, die auf die Anregung von Vibrationsschwingungen von Bindungen zwischen Atomen in diesen Substanzen zurückzuführen sind. Es gibt in diesem Spektralbereich jedoch keine klar unterscheidbaren Linien, die einer bestimmten chemischen Verbindung zugeordnet werden könnten; vielmehr hat so gut wie jede organische Verbindung C-C-Bindungen und C-H-Bindungen, deren Linien infolge von Wechselwirkungen mit Nachbaratomen von einer Substanz zur anderen zwar geringfügig verschoben sein können, gleichzeitig aber auch so verbreitert sind, dass die Verschiebungen schwer zu identifizieren sind. So ist die Zahl der Freiheitsgrade, in denen die NIR-Spektren verschiedener Verbindungen sich voneinander unterscheiden können, im Allgemeinen wesentlich kleiner als die Zahl der Verbindungen, die in einer Probe enthalten sein können. Um aus einem NIR-Spektrum nützliche Information über die Zusammensetzung einer Probe ziehen zu können, müssen im Vorhinein weitreichende Annahmen über die Beschaffenheit der Probe gemacht werden, und die Richtigkeit dieser Annahmen bestimmt die Aussagekraft der aus dem Spektrum gewonnenen Informationen. In der Praxis bedeutet diese, dass, um durch Analyse eines NIR-Spektrums Angaben über wertbestimmende Bestandteile einer Getreideprobe machen zu können, Art und Sorte des Getreides sowie eventuell noch andere Einflussgrößen bekannt sein müssen, um ein für die Probe passendes Kalibrierungsmodell wählen zu können. Die Optimierung dieser Kalibrierungsmodelle ist Gegenstand intensiver Entwicklung. Anhand von verschiedenen Kalibrierungsmodellen gewonnene Ergebnisse sind nicht ohne weiteres miteinander vergleichbar.

Ein NIR-Sensorkopf zur Verwendung in einer landwirtschaftlichen Maschine ist aus DE 10 2004 048 103 B4 bekannt. Der Sensorkopf umfasst eine Beleuchtungsquelle zum Beleuchten von zu untersuchendem Material, eine Spektrometeranordnung als NIR-Sensor, einen Prozessor zur Erfassung und Bearbeitung der Messwerte sowie eine Schnittstelle zu einem Bussystem der landwirtschaftlichen Maschine, die wahlweise Messergebnisse oder Rohdaten zur Weiterverarbeitung an das Bussystem der Maschine ausgeben kann. Aus den gewonnenen Daten sind Parameter - jeweils unter Zugrundelegung einer geeigneten Kalibrierung - Parameter wie etwa Feuchte, Protein-, Stärke- oder Ölgehalt, Schnittlänge, Faserzustand oder Temperatur ableitbar. Zu der Art und Weise, in der der Prozessor die Rohdaten zu Messwerten weiterverarbeitet, oder wie die Rohdaten von einem an den Bus angeschlossenen Empfänger verarbeitet werden, macht die Schrift keine Angaben. Daher besteht auch hier das Problem, dass Messergebnisse von zweifelhafter Qualität sind, wenn sie mit einem ungeeigneten oder veralteten Kalibrierungsmodell gewonnen werden.

Aus EP 3 366 104 A1 ist eine gattungsgemäße landwirtschaftliche Maschine bekannt.

Eine Vergleichbarkeit von Auswertungsergebnissen über mehrere Jahre hinweg ist aber wünschenswert, um etwa die Wirksamkeit von Pflegemaßnahmen wie Düngung, Schädlingsbekämpfung etc. beurteilen und deren Umfang optimieren zu können.

Eine Aufgabe der Erfindung ist, eine landwirtschaftliche Maschine mit NIR-Sensor bereitzustellen, die eine solche Vergleichbarkeit ermöglicht.

Die Aufgabe wird gelöst, indem bei einer landwirtschaftlichen Maschine mit einem NIR-Sensor, der eingerichtet ist, um NIR-Spektren von Pflanzenmaterial zu erfassen und als Rohdaten auszugeben, einer Auswerteeinheit zum Ableiten wenigstens eines Parameters des Pflanzenmaterials in Echtzeit aus den Rohdaten, und einer Schnittstelle für den Datenverkehr mit wenigstens einer Datenverarbeitungseinheit außerhalb der Maschine wobei die Schnittstelle eingerichtet ist zum Übertragen der die NIR-Spektren umfassenden Rohdaten an die Datenverarbeitungseinheit. So können an der Datenverarbeitungseinheit Daten, die an einer gegebenen Feldfläche und -frucht gewonnen wurden, über mehrere Jahre gesammelt und bei Bedarf mit einem gleichen Kalibrierungsmodell ausgewertet werden, und die Wirksamkeit von in verschiedenen Jahren vorgenommenen Pflegemaßnahmen kann anhand eines Vergleichs der Auswertungsergebnisse beurteilt werden. Des Weiteren können die Rohdaten an der Datenverarbeitungseinheit genutzt werden, um auf der Maschine, von der sie bereitgestellt worden sind, oder auf anderen Maschinen verwendete Kalibrierungsmodelle zu optimieren oder bei Bedarf neue Kalibrierungsmodelle zu erstellen.

Damit diese Kalibrierungsmodelle auch der Arbeit der Maschine zugutekommen können, die die für ihre Erstellung benötigten Rohdaten liefert, sollte die Auswertungseinheit eingerichtet sein, um zum Ableiten des wenigstens einen Parameters ein austauschbares Kalibrierungsmodell zu verwenden. Dadurch wird z.B. einerseits die Möglichkeit geschaffen, Kalibrierungsmodelle speziell für den NIR-Sensor der Maschine unter Berücksichtigung von dessen individuellen Eigenschaften zu erstellen, um so dessen Leistung zu optimieren, zum anderen können anhand großer Mengen von Rohdaten, die von verschiedenen Maschinen herrühren, Gemeinsamkeiten in der Messcharakteristik von deren verschiedenen Sensoren sicher erkannt bei der Auswertung für alle Sensoren einheitlich zugrunde gelegt werden.

Zweckmäßigerweise kann dieselbe Schnittstelle, mit der die Rohdaten von der Maschine an die Datenverarbeitungseinheit übertragen werden, auch dazu dienen, in umgekehrter Richtung neue Kalibrierungsmodelle von der Datenverarbeitungseinheit auf die Auswerteeinheit der Maschine aufzuspielen.

Die Schnittstelle kann eingerichtet sein, neben den Rohdaten auch von der Auswerteeinheit abgeleitete Werte des wenigstens einen Parameters zu übertragen. Zum einen kann so die Kompatibilität mit bereits in der Landwirtschaft verbreiteten Systemen sichergestellt werden, die lediglich Auswertungsergebnisse von einem maschinengestützten Auswerteeinheit an eine stationäre Datenverarbeitungseinheit vorsehen; zum anderen kann dadurch, dass ein gleicher Übertragungsweg für die Auswertungsergebnisse und für die Rohdaten verwendet wird, der Arbeitsaufwand für einen Betreiber der Maschine minimiert werden. Dies ist insbesondere dann von Bedeutung, wenn der Betreiber der Maschine selber keinen unmittelbaren Nutzen aus der Bereitstellung der Rohdaten zieht.

Die landwirtschaftliche Maschine weist typischerweise ein Verarbeitungsaggregat zur Verarbeitung des Pflanzenmaterials wie etwa ein Dresch- oder Häckselwerk auf. Die von der Auswerteeinheit in Echtzeit gewonnenen Daten können genutzt werden, um wenigstens einen Betriebsparameter des Verarbeitungsaggregats an die - eventuell auf einer zusammenhängenden Feldfläche je nach Bodenqualität oder anderen Umständen variable - Beschaffenheit des Ernteguts anzupassen.

Ein solcher - z.B. den Energieaufwand beim Dreschen oder Häckseln beeinflussender - Parameter kann z.B: der Wassergehalt des Pflanzenmaterials oder ein für den Reifegrad des Pflanzenmaterials repräsentativer Parameter sein.

Vorzugsweise umfasst die Maschine einen Zeitgeber und/oder eine Vorrichtung zur Positionsbestimmung wie etwa ein Satellitennavigationsgerät. Dann kann die Auswertungseinheit eingerichtet sein, den NIR-Spektren jeweils Zeiten und/oder Orte ihrer Erzeugung beizufügen. Anhand der Zeiten kann die Datenverarbeitungseinheit außerhalb der Maschine, wenn ihr die Trajektorie der Maschine, z.B. aus einer vorhergehenden Routenplanung, bekannt ist, den zu einem empfangenen Spektrum gehörigen Ort ermitteln und mit dem Spektrum abspeichern. Die Kenntnis des Ortes, an dem ein Spektrum entstanden ist, ermöglicht eine ortsabhängige Optimierung der Pflegemaßnahmen.

Die Schnittstelle kann eingerichtet sein, die Rohdaten in integritätsgeschützter Form zu übertragen, z.B. verschlüsselt oder verknüpft mit einer Prüfinformation, die nach einer geheimgehaltenen Vorschrift aus den Rohdaten berechnet wird und die im Falle einer Veränderung der Rohdaten ein abweichendes Ergebnis liefert. So hat die Datenverarbeitungseinheit außerhalb der Maschine jederzeit die Gewissheit, dass diese nicht verändert worden sind. Dies ist besonders dann von Bedeutung, wenn die Daten zur Festlegung eines Verkaufspreises für das Pflanzenmaterial herangezogen werden.

Die Schnittstelle ist vorzugsweise eingerichtet, um die Rohdaten über eine drahtlose Verbindung zu übertragen. So bleibt dem die Maschine bedienenden Personal die Herstellung einer körperlichen Übertragungsverbindung oder die Handhabung eines Datenträgers erspart. Denkbar ist aber auch, dass die Schnittstelle einen austauschbaren Datenträger umfasst, auf dem die während eines Einsatzes der Maschine gesammelten Rohdaten gesammelt werden, und der nach dem Einsatz aus der Maschine entnommen wird, um an die Datenverarbeitungseinheit außerhalb der Maschine angeschlossen und ausgelesen zu werden.

Die Schnittstelle kann ausgelegt sein, um die Rohdaten in Echtzeit zu übertragen; für den Fall, dass die Maschine sich außerhalb der Reichweite der drahtlosen Verbindung bewegt, kann ein Zwischenspeicher vorgesehen sein, um die Rohdaten zu sammeln, bis die Verbindung wieder verfügbar ist.

Gegenstand der Erfindung ist ferner ein Datenverarbeitungssystem, in dem eine Datenverarbeitungseinheit mit mindestens einer landwirtschaftlichen Maschine wie oben beschrieben zusammenwirkt, deren Schnittstelle eingerichtet ist, die Rohdaten an die Datenverarbeitungseinheit zu übertragen. Die Datenverarbeitungseinheit ist eingerichtet, ein Kalibrierungsmodell zum Ableiten wenigstens eines Parameters des Pflanzenmaterials unter Nutzung der Rohdaten zu generieren. Je größer die Zahl der an dem Datenverarbeitungssystem beteiligten Maschinen ist, umso größere Mengen an Rohdaten können in kurzer Zeit in der Datenverarbeitungseinheit zusammengetragen werden. Dies ermöglicht die Erstellung von Kalibrierungsmodellen in der Datenverarbeitungseinheit auf der Grundlage großer Datenmengen, so dass statistische Fehler bei der Modellgenerierung weitgehend durch Mittelung unterdrückt werden können bzw. der Einfluss einer Vielzahl von Größen auf die zu ermittelnden Parameter des Pflanzenmaterials untersucht und zur Erstellung von für jeweils bestimmte Werte dieser Größen spezifischen Modellen berücksichtigt werden können.

Die so erstellten Modelle können von der Datenverarbeitungseinheit auf die Maschinen zur Verwendung dort heruntergeladen werden. Sie können dort vorhandene Kalibrierungsmodelle im Rahmen einer Aktualisierung ersetzen, um eine genauere, schnellere oder anderweitig verbesserte Ermittlung von Parametern zu ermöglichen, die bereits von früher vorhandenen Modellen ermittelt wurden; sie können aber auch das Funktionsspektrum der Maschine um die Ermittlung von neuen Parametern erweitern.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine landwirtschaftliche Maschine mit einem NIR-Sensor;
- Fig. 2: ein Blockdiagramm des NIR-Sensors und einer Auswerteeinheit, und
- Fig. 3: eine Anwendungsumgebung der Maschine.

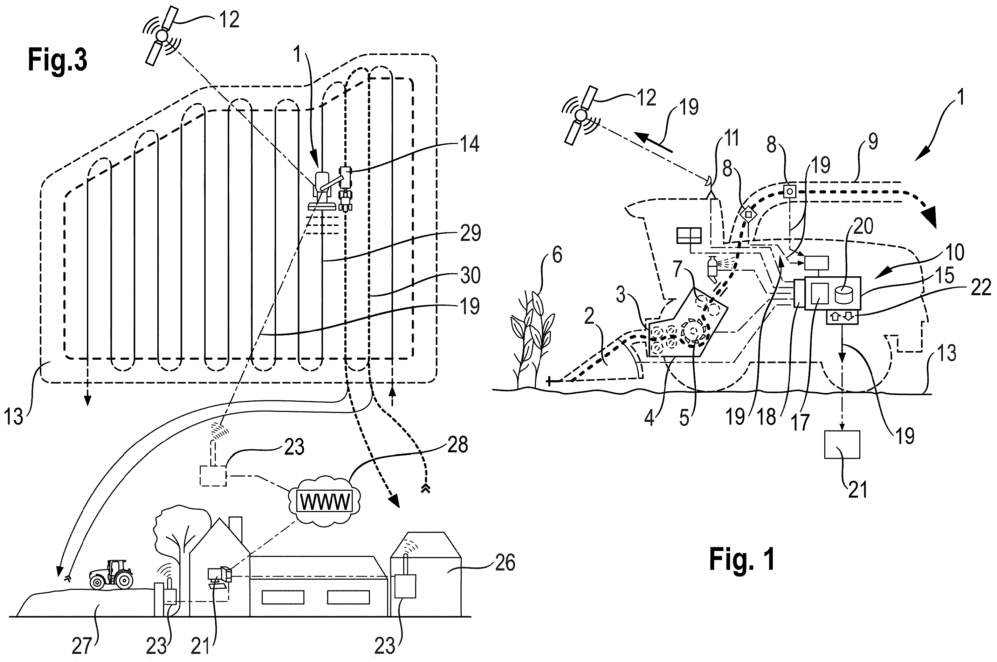

Fig. 1 zeigt einen Feldhäcksler 1 in einer schematischen, teilweise geschnittenen Seitenansicht beim Abernten eines Bestandes von Pflanzen 6, insbesondere Maispflanzen, auf einem Feld. Der Feldhäcksler1 weist in an sich bekannter Weise einen in Anpassung an das zu erntende Pflanzenmaterial austauschbaren Erntevorsatz 2, der das Pflanzenmaterial S schneidet und aufnimmt, um es einem Häckselaggregat 4 zuzuführen.

Das Häckselaggregat 4 umfasst eine Fördereinrichtung mit mehreren Walzenpaaren 3, die das Pflanzenmaterial vom Erntevorsatz 2 abnimmt, eine drehangetriebene Häckseltrommel 5, die mit einer ortsfesten Schneidkante zusammenwirkt, um das Pflanzenmaterial S in einem ersten Verarbeitungsschritt zu zerkleinern, und einen Corn-Cracker 7. Nach Durchlaufen des Corn-Crackers 7 erreicht das Pflanzenmaterial S, angetrieben von einem Nachbeschleuniger, einen Auswurfkrümmer 8. Einstellbare Betriebsparameter sind hier eine Spaltbreite zwischen der Schneidkante und der Häckseltrommel, Fördergeschwindigkeit der Walzenpaare 3 und Drehgeschwindigkeit der Häckseltrommel 5 oder das Verhältnis zwischen diesen Geschwindigkeiten, die Spaltbreite des Corn-Crackers 7 sowie die Gebläseleistung des Nachbeschleunigers.

Eine IR-Lichtquelle und ein NIR-Sensor 8 zur Überwachung der Beschaffenheit des Pflanzenmaterials S können an verschiedenen Stellen auf dem Weg des Pflanzenmaterials S durch den Feldhäcksler 1 vorgesehen sein; vorzugsweise an Stellen, an denen das zu überwachende Pflanzenmaterial gegenüber sichtbarem Außenlicht und IR-Strahlung abgeschirmt ist. Fig. 1 zeigt exemplarisch zwei NIR-Sensoren 8 die am Auswurfkrümmer 9 angeordnet sind, um die Beschaffenheit des hindurchlaufenden gehäckselten Pflanzenmaterials zu überwachen.

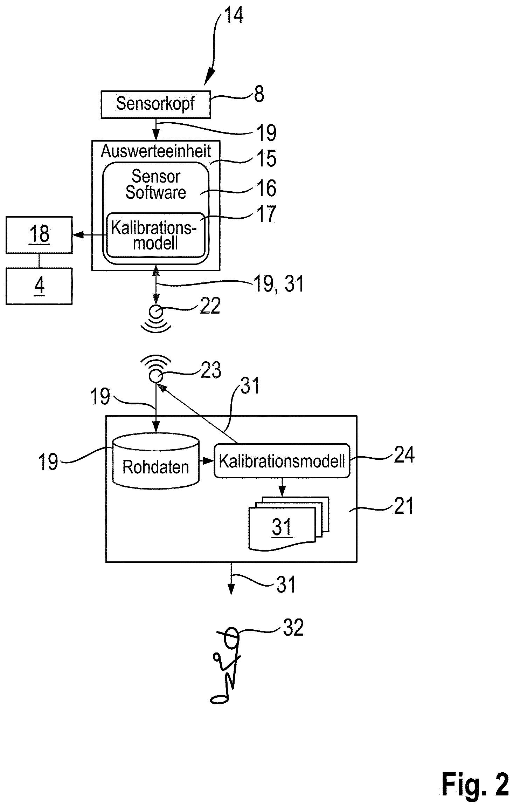

Die NIR-Sensoren 8 sind verbunden mit einer Auswerteeinheit 15 an Bord des Feldhäckslers 1, die von den NIR-Sensoren 8 ausgegebene Rohdaten 19 in Form von Spektren empfängt. Fig. 2 ist ein Blockdiagramm eines NIR-Sensors 8, der Auswerteeinheit 15 und von mit ihnen zusammenwirkenden Einheiten innerhalb und außerhalb des Feldhäckslers 1. Die Auswerteeinheit 15 kann Teil eines Bordcomputers 10 des Feldhäckslers 1 oder mit dem NIR-Sensor in einer Baueinheit zusammengefasst sein.

Die Auswerteeinheit 15 ist verbunden mit einem Satellitennavigationssystem 11 an Bord des Feldhäckslers 1, das in an sich bekannter Weise Signale von Navigationssatelliten 12, z.B. des GPS- oder Galileo-Systems, empfängt, um die geographische Position des Feldhäckslers 1 zu bestimmen und diese z.B. zur Unterstützung von autonomem Navigieren des Feldhäckslers 1 auf dem Feld einzusetzen.

Auf der Auswerteeinheit 15 läuft eine Sensor-Software 16. Ein Teil dieser Sensor-Software 16 ist durch ein Kalibrierungsmodell 17 gebildet, darunter ist ein Unterprogramm der Sensor-Software 16 zu verstehen, das anwendungsspezifisch unter verschiedenen in einem Massenspeicher der Auswerteeinheit 15 hinterlegten Modellen ausgewählt oder nach Bedarf auf die Auswerteeinheit 15 aufgespielt wird und eingerichtet ist, für eine bestimmte Art und/oder Sorte von Erntegut, eventuell auch spezifisch für bestimmte Umweltbedingungen bei der Ernte, die Mengenanteile einzelner Substanzen wie etwa Protein, Fett, Zucker am Erntegut zu bestimmen und die Ergebnisse an eine Steuereinheit 18 des Häckselaggregats 4 weiterzugeben. Durch Anwendung geeigneter Kalibrierungsmodelle sind weitere Inhaltsstoffe detektierbar.

Ein für den Betrieb des Häckselaggregats 4 relevanter Parameter kann z.B. der Trockenmasseanteil im Erntegut sein, da dieser einen Einfluss auf die Häckselbarkeit und damit auf die erforderliche Antriebsleistung und - geschwindigkeit der Häckseltrommel 5, über die Härte der im Pflanzenmaterial enthaltenen Körner auf Spaltbreite und Antriebsleistung des Corn-Crackers 7 sowie über das Gewicht der Häckselteilchen, auf die benötigte Leistung des Nachbeschleunigers hat. Denkbar ist auch, über eine Beurteilung des Stärkeanteils im Häckselgut auf den Komanteil zu schließen und in Abhängigkeit von diesem Betriebsparameter des Corn-Crackers 7 festzulegen. Um die Anforderungen an die Rechenleistung der Auswerteeinheit 15 gering zu halten, berechnet das Kalibrierungsmodell 17 nur solche Parameter des Pflanzenmaterials S, die von der Steuereinheit 18 tatsächlich für die Steuerung des Häckselaggregats 4 herangezogen werden.

Eine hiervon unabhängige Aufgabe der Sensor-Software 16 ist, den im Laufe der Zeit von dem NIR-Sensor 8 empfangenen Spektren jeweils eine Angabe zum Ort, an dem das Spektrum aufgenommen wurde, zuzuordnen. Die Spektren selber werden dadurch nicht verändert, so dass sowohl für die unmittelbar von dem NIR-Sensor 8 ausgegebenen Spektren als auch für die Spektren mit hinzugefügter Ortsangabe die Bezeichnung "Rohdaten" 19 gerechtfertigt ist. Die Ortsangabe wird von dem Satellitennavigationssystem 11 bereitgestellt.

Die Sensor-Software 16 kann ferner die Spektren verschlüsseln oder aus ihnen nach einer geheim gehaltenen Vorschrift ein Prüfdatum berechnen und zu den Spektren hinzufügen, um integritätsgesicherte Spektren zu erhalten. Da durch die Verschlüsselung keine Information verlorengeht, sondern durch Entschlüsselung die ursprünglichen Spektren wiederhergestellt werden können, können auch die integritätsgesicherten Spektren als Rohdaten 19 angesehen werden.

Ein Massenspeicher 20 ist vorgesehen, um die - ggf. integritätsgesicherten - Spektren mit den dazugehörigen Ortsangaben solange zwischenzuspeichern, bis sie an eine stationäre Datenverarbeitungseinheit 21 übertragen werden können. Zu diesem Zweck sind komplementäre Funkschnittstellen 22, 23 auf Seiten des Feldhäckslers 1 bzw. auf Seiten der Datenverarbeitungseinheit 21 vorgesehen. Die Funkschnittstellen 22, 23 können mit einem öffentlichen Mobilfunknetz kompatibel sein, um die Übertragung der Spektren immer dann zu ermöglichen, wenn der Feldhäcksler 1 sich im Abdeckungsbereich des Mobilfunknetzes befindet; es kann sich aber auch z.B. um WLAN-Schnittstellen handeln, die eine Datenübertragung nur dann ermöglichen, wenn, z.B. in einer Scheune oder Garage des Betreibers des Feldhäckslers 1, die Funkschnittstellen 22, 23 sich in gegenseitiger Reichweite befinden. Die Speicherkapazität des Massenspeichers 20 ist jeweils entsprechend einer während einer Unterbrechung der Kommunikation zwischen den Funkschnittstellen 22, 23 zu erwartenden Datenmenge dimensioniert und kann daher bei Verwendung von Mobilfunkschnittstellen kleiner sein als bei WLAN-Schnittstellen.

Im Extremfall kann der Massenspeicher 20 eine für die Rohdaten 19 eines Ernteeinsatzes ausreichende Speicherkapazität haben und austauschbar sein, um nach dem Einsatz ausgebaut und an die Datenverarbeitungseinheit 21 angeschlossen zu werden; in diesem Fall bildet der Massenspeicher 20 selber die Schnittstelle für die Datenkommunikation zwischen der Maschine und der Datenverarbeitungseinheit 21, und die Funkschnittstellen 22, 23 werden nicht benötigt.

Die Datenverarbeitungseinheit 21 kann wie in Fig. 1 gezeigt ein Computer in einem landwirtschaftlichen Betrieb sein, zu dem der Feldhäcksler 1 und/oder ein Feld gehört, auf dem dieser eingesetzt wird; es kann sich auch um einen Computer eines Dienstleisters für eine Mehrzahl von Betreiben, ein Cloud-System oder eine Kombination der genannten handeln. Die Datenverarbeitungseinheit 21 speichert diverse Kalibrierungsmodelle 24 für verschiedene Sorten von Erntegut sowie ggf. Dienstprogramme zur Entschlüsselung bzw. Integritätsprüfung der Rohdaten 19. Unter den Kalibrierungsmodellen 24 können sich welche zum Berechnen der vom Häckselaggregat 4 berücksichtigten Parameter für verschiedene Sorten von Erntegut befinden, von denen vor Beginn eines Ernteeinsatzes eines passend zur zu erntenden Sorte ausgewählt und mittels der Funkschnittstellen 22, 23 in die Auswerteeinheit 15 heruntergeladen wird, um dort als Kalibrierungsmodell 17 zu dienen. Weitere Kalibrierungsmodelle 24 können zur Berechnung der Anteile anderer Verbindungen am Erntegut vorgesehen sein. So ist die Datenverarbeitungseinheit 21 in der Lage, anhand der an sie übertragenen Rohdaten 19 die Mengen beliebiger wertbestimmender oder anderweitig interessierender Substanzen im Erntegut zu ermitteln, ohne dafür Rechenleistung an Bord des Feldhäckslers 1 in Anspruch zu nehmen.

Anhand der mit den NIR-Spektren in den übertragenen Rohdaten 19 zugeordneten geographischen Positionsdaten ist die Datenverarbeitungseinheit 21 in der Lage, die oben erwähnten Parameter und Substanzmengen jeweils ortsaufgelöst zu berechnen und Karten ihrer geographischen Verteilung zu generieren. Diese können genutzt werden, um über eventuelle Pflanzenschutz- oder Bodenpflegemaßnahmen zu entscheiden und diese ggf. mit ortsabhängiger Intensität durchzuführen, z.B. einen Dünger anhand eines aus den ortsabhängig ermittelten Substanzmengen ermittelten Bedarfs in jeweils ortsangepasster Menge auszubringen.

Die Datenverarbeitungseinheit 21 kann zu einem landwirtschaftlichen Betrieb gehören, etwa dem des Betreibers des Feldhäckslers oder des Eigentümers des Feldes 13. Zweckmäßiger kann es sein, wenn die Datenverarbeitungseinheit 21 von einem Dienstleister betrieben wird, der für eine Vielzahl von landwirtschaftlichen Betrieben arbeitet und so in der Lage ist, Rohdaten 19 von allen diesen Betrieben zu sammeln und für die Entwicklung und Optimierung der Kalibrierungsmodelle zu verwenden.

Denkbar ist auch, dass die Datenverarbeitungseinheit 21 mehrere Rechner umfasst, darunter welche, die jeweils zu einem landwirtschaftlichen Betrieb gehören und Daten der zum Betrieb gehörigen Flächen und der darauf angebauten Früchte sowie für diese Früchte benötigte und von dem Betrieb lizenzierte Kalibrierungsmodelle speichern, um diese auf die Maschinen 1 herunterzuladen oder lokal Auswertungen vorzunehmen, als auch einen zentralen Rechner, der die Rohdaten 19 sammelt, um sie für die für die Entwicklung und Optimierung der Kalibrierungsmodelle zu verwenden. Die Übertragung der Rohdaten 19 vom Feldhäcksler 1 in die Datenverarbeitungseinheit 21 kann auf einfache Weise sichergestellt werden, wenn zu ihrer Übertragung derselbe Übertragungsweg verwendet wird wie für Parameterwerte, die bereits von der Auswerteeinheit 15 des Feldhäckslers 1 ermittelt worden sind. Da diese Daten für den landwirtschaftlichen Betrieb von Bedeutung sind, werden Mitarbeiter des Betriebs im Allgemeinen dafür sorgen das diese zur Datenverarbeitungseinheit 21 übertragen werden können, und die Rohdaten 19 können dann auf demselben Weg übertragen werden, ohne dass dies gezielter weiterer Maßnahmen durch das Personal des landwirtschaftlichen Betriebs bedarf.

Fig. 3 zeigt eine typische Anwendungssituation des Feldhäckslers 1. Der Feldhäcksler 1 beerntet ein Feld 13, begleitet von einem Transportfahrzeug 14, an das das gehäckselte Pflanzenmaterial mittels des Auswurfkrümmers 9 kontinuierlich übergeben wird. Beide navigieren auf dem Feld 13 autonom oder teilautonom, indem sie mit Hilfe der Navigationssatelliten 12 ihre Position relativ zueinander und zu vorgeplanten Routen 25 fortlaufend überprüfen und korrigieren. Die Auswerteeinheit 15 des Feldhäckslers steht über die Funkschnittstellen 22, 23 in Kommunikationsverbindung mit der Datenverarbeitungseinheit 21. Fig 3 zeigt die Datenverarbeitungseinheit 21 in einem Betriebsgebäude eines landwirtschaftlichen Betriebs, zu dem der Feldhäcksler 1 und/oder das Feld 13 gehören. In der Praxis kann die Datenverarbeitungseinheit 21 auch entfernt von dem landwirtschaftlichen Betrieb, z. B. bei einem Dienstleister, aufgestellt sein oder ein Netzwerk sein, das Rechner mehrerer landwirtschaftlicher Betriebe umfasst, die jeweils Rohdaten 19 liefern. Die Funkschnittstelle 23 ist hier eine Basisstation eines öffentlichen Mobilfunknetzes 28, das mobilen Datenverkehr, z.B. über Internet, unterstützt. Die Nutzung eines satellitengestützten Mobilfunksystems kommt ebenfalls in Betracht. Weitere, mit der Datenverarbeitungseinheit 21 z.B. über LAN verbundene Funkschnittstellen 23 können in einer Scheune 26, in der der Feldhäcksler 1 und/oder das Transportfahrzeug 14 bei Nichtgebrauch geparkt sind, oder an einem Silo 27 vorgesehen sein, zu dem das Transportfahrzeug 14 das gehäckselte Pflanzenmaterial vom Feld 13 befördert.

Die Datenverarbeitungseinheit 21 führt eine Datenbank der von dem Betrieb bewirtschafteten Feldflächen, in der unter anderem ihre geographischen Daten, die aktuell und in der Vergangenheit darauf angebauten Pflanzensorten, Dünge- und Pflanzenschutzmaßnahmen etc. verzeichnet sind, sowie eine Bibliothek der Kalibrierungsmodelle 24. Anhand der geographischen Daten plant die Datenverarbeitungseinheit 21 die Routen 29, 30 des Feldhäckslers 1 und des Transportfahrzeugs 14 und überträgt diese, vor Beginn eines Ernteeinsatzes typischerweise über die Funkschnittstelle 23 der Scheune 26. Wenn während des Einsatzes auf dem Feld 13 eine Aktualisierung der Routen 29, 30 nötig wird, kann diese über die Funkschnittstelle 23 des Mobilfunknetzes 28 erfolgen.

In Kenntnis der auf der zu bearbeitenden Ackerfläche angebauten Sorte wählt die Datenverarbeitungseinheit 21 aus der Bibliothek der Kalibrierungsmodelle 24 das für die angebaute Sorte passende Kalibrierungsmodell und überträgt dieses an die Auswertungseinheit 15 des Feldhäckslers 1. Typischerweise findet diese Übertragung mittels der Funkschnittstelle 23 der Scheune 26 statt; die Funkschnittstelle 23 des Mobilfunknetzes 28 kann ebenfalls genutzt werden, insbesondere wenn während eines Einsatzes Wetterbedingungen oder sonstige unvorhergesehene Umstände zum Umdisponieren zwingen und das heruntergeladene Modell nicht mehr angemessen ist.

Während des Ernteeinsatzes gewonnene NIR-Spektren sowie eventuell von der Auswerteeinheit 15 daraus ermittelte Parameterwerte können über die Funkschnittstelle 23 des Mobilfunknetzes 28 an die Datenverarbeitungseinheit 21 hochgeladen werden; alternativ kann die Übertragung nach Beendigung des Einsatzes über die Funkschnittstelle 23 der Scheune 26 erfolgen. Denkbar ist auch, dass der Feldhäcksler 1 und das Transportfahrzeug während des Fahrens auf dem Feld 13 ein WLAN unterhalten, über das die vom Feldhäcksler 1 gesammelten NIR-Spektren zusammen mit dem Pflanzenmaterial, auf das sie sich beziehen, an einen Speicher des Transportfahrzeugs 14 übertragen und von diesem, sobald es sich in Reichweite einer Funkschnittstelle 23 des Betriebs befindet, über diese an die Datenverarbeitungseinheit 21 weitergegeben werden. Im einen wie im anderen Falle verfügt die Datenverarbeitungseinheit 21 jeweils bei Eintreffen einer neuen Fuhre Pflanzenmaterial am Silo 27 über die zu dieser Fuhre gehörigen NIR-Spektren, die es ihr ermöglichen, die Verdichtung des Pflanzenmaterials am Silo 27 optimal zu steuern.

Die gesammelten Rohdaten 19 bleiben auch nach einer Auswertung durch die Datenverarbeitungseinheit 21 dort gespeichert. Dies erlaubt es, NIR-Spektren einer großen Zahl von Betrieben, betreffend eine Vielzahl von Pflanzensorten, die auf unterschiedlichen Böden gewachsen und unter einer Vielzahl von Wetterbedingungen angebaut bzw. geerntet worden sind, zu sammeln, um auf dieser umfassenden Datengrundlage verbesserte Kalibrierungsmodelle 31 zu erstellen bzw. wenn eine neue, im Stand der Technik bislang nicht berücksichtigte Einflussgröße erkannt wird, diverse Kalibrierungsmodelle 31 für diverse mögliche Werte dieser Einflussgröße zu entwickeln. Diese können anschließend an Maschinen der angeschlossenen landwirtschaftlichen Betriebe übertragen werden, um dort für die Auswertung der Rohdaten 19 eingesetzt zu werden; sie können aber auch an Dritte 32, z.B. an Weiterverarbeiter des Pflanzenmaterials, weitergegeben werden, um diesen eine effiziente Kontrolle der Beschaffenheit des an sie gelieferten Pflanzenmaterials zu ermöglichen. Für die Erstellung dieser Kalibrierungsmodelle 31 können zusätzlich zu den von den Maschinen gelieferten Rohdaten auch Ergebnisse von Analysewerten herangezogen werden, die auf anderem Wege als durch einen NIR-Sensor erhalten wurden, z.B. durch herkömmliche Analyse der Inhaltsstoffe einer Materialprobe in einem Labor.

Die übertragenen Rohdaten 19 können an der Datenverarbeitungseinheit 21 solange gespeichert bleiben, wie dies als zweckmäßig angesehen wird. Indem somit auf einer gegeben Feldfläche im Laufe verschiedener Ernten gewonnene Rohdatensätze gesammelt werden, können diese mit einem gleichen Kalibrierungsmodell 24 ausgewertet werden und so Aufschluss über die Entwicklung absoluter oder relativer Mengen von interessierenden Substanzen im Erntegut im Laufe mehrerer Jahre liefern. Da Kalibrierungsmodelle verwendet werden können, die jünger sind als die Daten, auf die sie sich beziehen, können auch nachträglich noch Auswertungen von hoher Qualität erhalten werden. Unter anderem können so auch Mengen von Substanzen im geernteten Pflanzenmaterial ermittelt werden, nach denen zum Zeitpunkt der Gewinnung der der Auswertung zugrundeliegenden Spektren noch gar nicht gesucht worden ist, oder zu deren Ermittlung zum Zeitpunkt der Entstehung der Spektren noch keine hinreichend genauen Kalibrierungsmodelle zur Verfügung standen.

### Bezugszeichen

- 1: Feldhäcksler
- 2: Erntevorsatz
- 3: Walzenpaar
- 4: Häckselaggregat
- 5: Häckseltrommel
- 6: Pflanze
- 7: Corn-Cracker
- 8: NIR-Sensor
- 9: Auswurfkrümmer
- 10: Bordcomputer
- 11: Navigationssystem
- 12: Navigationssatellit
- 13: Feld
- 14: Transportfahrzeug
- 15: Auswerteeinheit
- 16: Sensor-Software
- 17: Kalibrierungsmodell
- 18: Steuereinheit
- 19: Rohdaten
- 20: Massenspeicher
- 21: Datenverarbeitungseinheit
- 22: Funkschnittstelle
- 23: Funkschnittstelle
- 24: Kalibrierungsmodell
- 25: Route
- 26: Scheune
- 27: Silo
- 28: Mobilfunknetz
- 29: Route
- 30: Route
- 31: Kalibrierungsmodell
- 32: Dritter

## Patentansprüche

1. Landwirtschaftliche Maschine (1) mit einem NIR-Sensor (8), der eingerichtet ist, um NIR-Spektren von Pflanzenmaterial zu erfassen und als Rohdaten (19) auszugeben, einer Auswerteeinheit (15) zum Ableiten wenigstens eines Parameters des Pflanzenmaterials in Echtzeit aus den Rohdaten (19), und einer Schnittstelle (22) für den Datenverkehr mit wenigstens einer Datenverarbeitungseinheit (21) außerhalb der Maschine (1), **dadurch gekennzeichnet, dass** die Schnittstelle (22) eingerichtet ist zum Übertragen der NIR-Spektren umfassenden Rohdaten (19) an die Datenverarbeitungseinheit (21).

2. Landwirtschaftliche Maschine nach Anspruch 1, **dadurch gekennzeichnet, dass** sie ein Verarbeitungsaggregat (5-10) zur Verarbeitung des Pflanzenmaterials aufweist und dass eine Steuereinheit (18) eingerichtet ist, wenigstens einen Betriebsparameter des Verarbeitungsaggregats (5-10) anhand des wenigstens einen von der Auswerteeinheit (15) ausgegebenen Parameters zu steuern.

3. Landwirtschaftliche Maschine nach einem der vorhergehenden Ansprüche, **dadurch gekennzeichnet, dass** die Auswertungseinheit (15) eingerichtet ist, um zum Ableiten des wenigstens einen Parameters ein austauschbares Kalibrierungsmodell zu verwenden.

4. Landwirtschaftliche Maschine nach Anspruch 3, **dadurch gekennzeichnet, dass** die Schnittstelle (22) eingerichtet ist zum Empfangen und Aufspielen des Kalibrierungsmodells auf die Auswertungseinheit (15).

5. Landwirtschaftliche Maschine nach einem der vorhergehenden Ansprüche, **dadurch gekennzeichnet, dass** die Schnittstelle (22) eingerichtet ist, neben den Rohdaten (19) auch von der Auswerteeinheit (15) abgeleitete Werte des wenigstens einen Parameters zu übertragen.

6. Landwirtschaftliche Maschine nach einem der vorhergehenden Ansprüche, **dadurch gekennzeichnet, dass** der wenigstens eine Parameter der Wassergehalt des Pflanzenmaterials oder ein für den Reifegrad des Pflanzenmaterials repräsentativer Parameter ist.

7. Landwirtschaftliche Maschine nach einem der vorhergehenden Ansprüche, **dadurch gekennzeichnet, dass** sie ferner einen Zeitgeber und/oder eine Vorrichtung zur Positionsbestimmung (11) umfasst und die Auswerteeinheit (15) eingerichtet ist, den NIR-Spektren jeweils Zeiten und/oder Orte ihrer Erzeugung beizufügen.

8. Landwirtschaftliche Maschine nach einem der vorhergehenden Ansprüche, **dadurch gekennzeichnet, dass** die Schnittstelle (22) eingerichtet ist, die Rohdaten (19) in integritätsgeschützer Form zu übertragen.

9. Landwirtschaftliche Maschine nach einem der vorhergehenden Ansprüche, **dadurch gekennzeichnet, dass** die Schnittstelle (22) eingerichtet ist, die Rohdaten (19) über eine drahtlose Verbindung zu übertragen.

10. Landwirtschaftliche Maschine nach Anspruch 9, **dadurch gekennzeichnet, dass** sie einen Zwischenspeicher (20) zum Speichern der Rohdaten (19) bei Nichtverfügbarkeit der drahtlosen Verbindung aufweist.

11. Datenverarbeitungssystem mit einer Datenverarbeitungseinheit (21) und mindestens einer landwirtschaftliche Maschine (1) nach einem der vorhergehenden Ansprüche, deren Schnittstelle (22) eingerichtet ist, die Rohdaten (19) an die Datenverarbeitungseinheit (21) zu übertragen, **dadurch gekennzeichnet, dass** die Datenverarbeitungseinheit (21) eingerichtet ist, ein Kalibrierungsmodell zum Ableiten wenigstens eines Parameters des Pflanzenmaterials unter Nutzung der Rohdaten (19) zu generieren.

12. Datenverarbeitungssystem nach Anspruch 11, **dadurch gekennzeichnet, dass** die Datenverarbeitungseinheit (21) eingerichtet ist, das Kalibrierungsmodell an eine der landwirtschaftliche Maschinen (1) herunterzuladen.

## Claims

1. An agricultural machine (1) with a NIR sensor (8) which is configured to detect NIR spectra of plant material and to output as raw data (19), an evaluation unit (15) for deriving at least one parameter of the plant material in real time from the raw data (19), and an interface (22) for data communication with at least one data processing unit (21) externally of the machine (1), **characterized in that** the interface (22) is configured to transmit the raw data (19) comprising the NIR spectra to the data processing unit (21).

2. The agricultural machine according to claim 1, **characterized in that** it has a processing assembly (5-10) for processing the plant material and **in that** a control unit (18) is configured to control at least one operating parameter of the processing assembly (5-10) with the aid of the at least one parameter output by the evaluation unit (15).

3. The agricultural machine according to one of the preceding claims, **characterized in that** the evaluation unit (15) is configured to use an interchangeable calibration model in order to derive the at least one parameter.

4. The agricultural machine according to claim 3, **characterized in that** the interface (22) is configured to receive and install the calibration model onto the evaluation unit (15).

5. The agricultural machine according to one of the preceding claims, **characterized in that** in addition to the raw data (19), the interface (22) is also configured to transmit values for the at least one parameter derived by the evaluation unit (15).

6. The agricultural machine according to one of the preceding claims, **characterized in that** the at least one parameter is the water content of the plant material or a parameter which is representative of the level of maturity of the plant material.

7. The agricultural machine according to one of the preceding claims, **characterized in that** it further comprises a timing unit and/or a device for determining position (11) and the evaluation unit (15) is configured to add times and/or locations of their generation to the respective NIR spectra.

8. The agricultural machine according to one of the preceding claims, **characterized in that** the interface (22) is configured to transmit the raw data (19) in an integrity-protected form.

9. The agricultural machine according to one of the preceding claims, **characterized in that** the interface (22) is configured to transmit the raw data (19) via a wireless link.

10. The agricultural machine according to claim 9, **characterized in that** it has a temporary memory (20) for storing the raw data (20) when the wireless link is unavailable.

11. A data processing system with a data processing unit (21) and at least one agricultural machine (1) according to one of the preceding claims, the interface (22) of which is configured to transmit the raw data (19) to the data processing unit (21), **characterized in that** the data processing unit (21) is configured to generate a calibration model for deriving at least one parameter of the plant material using the raw data (19).

12. The data processing system according to claim 11, **characterized in that** the data processing system (21) is configured to download the calibration model to one of the agricultural machines (1).

## Revendications

1. Machine agricole (1) comprenant un capteur NIR (8), qui est conçu pour recueillir des spectres NIR de matières végétales et les délivrer sous forme de données brutes (19), une unité d'évaluation (15), destinée à dériver au moins un paramètre des matières végétales en temps réel à partir des données brutes (19), et une interface (22) pour l'échange de données avec au moins une unité de traitement de données (21) à l'extérieur de la machine (1), **caractérisée en ce que** l'interface (22) est conçue pour transmettre les données brutes (19), comprenant des spectres NIR, à l'unité de traitement de données (21).

2. Machine agricole selon la revendication 1, **caractérisée en ce qu'**elle présente un groupe de traitement (5 à 10) destiné à traiter les matières végétales, et **en ce qu'**une unité de commande (18) est conçue pour contrôler au moins un paramètre de fonctionnement du groupe de traitement (5 à 10) à l'aide du paramètre, au nombre d'au moins un, délivré par l'unité d'évaluation (15).

3. Machine agricole selon une des revendications précédentes, **caractérisée en ce que** l'unité d'évaluation (15) est conçue pour utiliser un modèle d'étalonnage interchangeable aux fins de déduire le paramètre, au nombre d'au moins un.

4. Machine agricole selon la revendication 3, **caractérisée en ce que** l'interface (22) est conçue pour la réception et l'installation du modèle d'étalonnage sur l'unité d'évaluation (15).

5. Machine agricole selon une des revendications précédentes, **caractérisée en ce que** l'interface (22) est conçue pour transmettre, outre les données brutes (19), des valeurs du paramètre, au nombre d'au moins un, déduites par l'unité d'évaluation (15).

6. Machine agricole selon une des revendications précédentes, **caractérisée en ce que** le paramètre, au nombre d'au moins un, est la teneur en eau des matières végétales ou un paramètre représentatif du degré de maturité des matières végétales.

7. Machine agricole selon une des revendications précédentes, **caractérisée en ce qu'**elle comprend en outre une horloge et/ou un dispositif de détermination de position (11), et l'unité d'évaluation (15) est conçue pour ajouter aux spectres NIR respectivement des heures et/ou des lieux de leur génération.

8. Machine agricole selon une des revendications précédentes, **caractérisée en ce que** l'interface (22) est conçue pour transmettre les données brutes (19) sous une forme à intégrité protégée.

9. Machine agricole selon une des revendications précédentes, **caractérisée en ce que** l'interface (22) est conçue pour transmettre les données brutes (19) par l'intermédiaire d'une liaison sans fil.

10. Machine agricole selon la revendication 9, **caractérisée en ce qu'**elle présente une mémoire tampon (20) destinée à stocker les données brutes (19) en cas de non-disponibilité de la liaison sans fil.

11. Système de traitement de données comprenant une unité de traitement de données (21) et au moins une machine agricole (1) selon une des revendications précédentes, dont l'interface (22) est conçue pour transmettre les données brutes (19) à l'unité de traitement de donnés (21), **caractérisé en ce que** l'unité de traitement de données (21) est conçue pour générer un modèle d'étalonnage en vue de déduire au moins un paramètre des matières végétales en utilisant les données brutes (19).

12. Système de traitement de données selon la revendication **11, caractérisée en ce que** l'unité de traitement de données (21) est conçue pour télécharger le modèle d'étalonnage à l'une des machines agricoles (1).
